(19) Europäisches Patentamt
European Patent Office
Office européen des brevets

(11) **EP 4 528 669 A1**

(12) **EUROPEAN PATENT APPLICATION**
published in accordance with Art. 153(4) EPC

(43) Date of publication:
26.03.2025 Bulletin 2025/13

(51) International Patent Classification (IPC):
*G06V 10/774* (2022.01)  *G06V 20/54* (2022.01)
*G06V 20/70* (2022.01)

(21) Application number: 24821735.8

(86) International application number:
PCT/CN2024/084979

(22) Date of filing: 29.03.2024

(87) International publication number:
WO 2025/020569 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.07.2023  CN 202310922726

(71) Applicant: Chengdu Kawa Technology Co., Ltd.
Chengdu, Sichuan 610000 (CN)

(72) Inventors:
• XU, Qian
  Sichuan 610 000 (CN)
• YANG, Xin
  Sichuan 610 000 (CN)
• JIA, Nan
  Sichuan 610 000 (CN)
• XIONG, Guangyin
  Sichuan 610 000 (CN)

(74) Representative: Cabinet Laurent & Charras
Le Contemporain
50 Chemin de la Bruyère
69574 Dardilly Cedex (FR)

(54) **IMAGE DATASET PROCESSING METHOD AND APPARATUS, AND DEVICE AND STORAGE MEDIUM**

(57) Provided are an image dataset processing method and apparatus, a device, and a storage medium. The method includes acquiring an initial autonomous driving image dataset; inputting the initial autonomous driving image dataset into a first autonomous driving detection model to obtain a first image detection result and inputting the initial autonomous driving image dataset into a second autonomous driving detection model to obtain a second image detection result; comparing the first image detection result with the second image detection result to obtain a comparison result; determining a comparison type based on the comparison result; determining evaluation scores of the multiple initial autonomous driving images based on the comparison type; and selecting a target autonomous driving image dataset from the initial autonomous driving image dataset based on the evaluation scores of the multiple initial autonomous driving images and adjusting at least one annotation in the target autonomous driving image dataset. This can improve the accuracy of image dataset processing.

Acquire an initial autonomous driving image dataset — S110

Input the initial autonomous driving image dataset into a first autonomous driving detection model to obtain a first image detection result, and input the initial autonomous driving image dataset into a second autonomous driving detection model to obtain a second image detection result — S120

Compare the first image detection result with the second image detection result to obtain a comparison result — S130

Determine a comparison type based on the comparison result — S140

Determine evaluation scores of the multiple initial autonomous driving images based on the comparison type — S150

Select a target autonomous driving image dataset from the initial autonomous driving image dataset based on the evaluation scores of the multiple initial autonomous driving images and adjust annotations in the target autonomous driving image dataset — S160

**FIG. 1**

**Description**

This application claims priority to Chinese Patent Application No. 202310922726.X filed with the China National Intellectual Property Administration (CNIPA) on Jul. 26, 2023, the disclosure of which is incorporated herein by reference in its entirety.

TECHNICAL FIELD

Embodiments of the present application relate to the field of image processing, particularly an image dataset processing method and apparatus, a device, and a storage medium.

BACKGROUND

As is well known, the development of autonomous driving is closely tied to advancements in artificial intelligence (AI) technology. Data, computing power, and algorithms-three key elements of AI-significantly influence the maturity of autonomous driving technology. Among these three elements, data plays a crucial role. AI can only identify patterns after being trained with vast amounts of data. In real-world applications, if AI encounters a scenario that has never appeared in its training set, AI is essentially making a blind guess, which can lead to prediction errors. Therefore, reliable and high-quality data becomes particularly important in the development process of autonomous driving.

Although high-level autonomous driving test vehicles collect terabytes (TB) of data daily and require petabytes (PB) of storage space, only around 5% or less of this data is valuable for training autonomous driving systems. It is urgent to address the problem of how to identify the most valuable and difficult samples from the vast amounts of data and prioritize annotating these difficult samples to accelerate model iteration of autonomous driving models and mass production of autonomous driving algorithms.

SUMMARY

Embodiments of the present application provide an image dataset processing method and apparatus, a device, and a storage medium, improving the accuracy of image dataset processing.

In a first aspect, an embodiment of the present application provides an image dataset processing method. The method includes acquiring an initial autonomous driving image dataset, where the initial autonomous driving image dataset includes multiple initial autonomous driving images and annotations corresponding to the multiple initial autonomous driving images; inputting the initial autonomous driving image dataset into a first autonomous driving detection model to obtain a first image detection result and inputting the initial autonomous driving image dataset into a second autonomous driving detection model to obtain a second image detection result; comparing the first image detection result with the second image detection result to obtain a comparison result, where the first image detection result serves as a reference detection result; determining a comparison type based on the comparison result, where the comparison type includes true positive, false positive, and false negative; determining evaluation scores of the multiple initial autonomous driving images based on the comparison type; and selecting a target autonomous driving image dataset from the initial autonomous driving image dataset based on the evaluation scores of the multiple initial autonomous driving images and adjusting at least one annotation in the target autonomous driving image dataset.

In a second aspect, an embodiment of the present application provides an image dataset processing apparatus. The apparatus includes an initial autonomous driving image dataset acquisition module, an image detection result acquisition module, an image detection result comparison module, a comparison type determination module, an evaluation score determination module, and a target autonomous driving image dataset selection module. The initial autonomous driving image dataset acquisition module is configured to acquire an initial autonomous driving image dataset, where the initial autonomous driving image dataset includes multiple initial autonomous driving images and corresponding annotations. The image detection result acquisition module is configured to input the initial autonomous driving image dataset into a first autonomous driving detection model to obtain a first image detection result and input the initial autonomous driving image dataset into a second autonomous driving detection model to obtain a second image detection result. The image detection result comparison module is configured to compare the first image detection result with the second image detection result to obtain a comparison result, where the first image detection result serves as a reference detection result. The comparison type determination module is configured to determine a comparison type based on the comparison result, where the comparison type comprises true positive, false positive, and false negative. The evaluation score determination module is configured to determine evaluation scores of the multiple initial autonomous driving images based on the comparison type. The target autonomous driving image dataset selection module is configured to select a target autonomous driving image dataset from the initial autonomous driving image dataset based on the evaluation scores of the multiple initial autonomous driving images and adjust at least one annotation in the target autonomous driving image dataset.

In a third aspect, an embodiment of the present application provides an electronic device. The electronic device includes at least one processor and a storage apparatus configured to store at least one program. When executed by the at least one processor, the at least one program causes the at least one processor to perform the image dataset processing method of any embodiment of the present application.

In a fourth aspect, an embodiment of the present application provides a storage medium including computer-executable instructions which, when executed by a computer processor, cause the processor to perform the image dataset processing method of any embodiment of the present application.

The solution of embodiments of the present application includes acquiring an initial autonomous driving image dataset, where the initial autonomous driving image dataset includes multiple initial autonomous driving images and corresponding annotations; inputting the initial autonomous driving image dataset into a first autonomous driving detection model to obtain a first image detection result and inputting the initial autonomous driving image dataset into a second autonomous driving detection model to obtain a second image detection result; comparing the first image detection result with the second image detection result to obtain a comparison result, where the first image detection result serves as a reference detection result; determining a comparison type based on the comparison result, where the comparison type includes true positive, false positive, and false negative; determining evaluation scores of the multiple initial autonomous driving images based on the comparison type; and selecting a target autonomous driving image dataset from the initial autonomous driving image dataset based on the evaluation scores of the multiple initial autonomous driving images and adjusting at least one annotation in the target autonomous driving image dataset. In embodiments of the present application, the following operations are performed: determining a comparison type based on the comparison result between the first image detection result and the second image detection result; determining evaluation scores of the multiple initial autonomous driving images based on the comparison type; and selecting a target autonomous driving image dataset based on the evaluation scores of the multiple initial autonomous driving images. This can improve the accuracy of image dataset processing.

BRIEF DESCRIPTION OF DRAWINGS

The above and other features, advantages, and aspects of embodiments of the present application will become more apparent with reference to the specific implementations hereinafter in conjunction with drawings. The same or similar reference numerals in the drawings denote the same or similar elements. It is to be understood that the drawings are schematic, and that originals and elements are not necessarily drawn to scale.

FIG. 1 is a flowchart of an image dataset processing method according to an embodiment of the present application.

FIG. 2 is a flowchart of an image dataset processing method according to an embodiment of the present application.

FIG. 3 is a diagram illustrating the effect between an IoU and an IoU evaluation score according to an embodiment of the present application.

FIG. 4 is a diagram illustrating the effect between a confidence level and a second evaluation score according to an embodiment of the present application.

FIG. 5 is a diagram illustrating the effect between a confidence level and a first evaluation score according to an embodiment of the present application.

FIG. 6 is a diagram illustrating the effect between an area and a second evaluation score according to an embodiment of the present application.

FIG. 7 is a diagram illustrating the effect between an area and a first evaluation score according to an embodiment of the present application.

FIG. 8 is a diagram illustrating the effect of a first image detection result according to an embodiment of the present application.

FIG. 9 is a diagram illustrating the effect of a second image detection result according to an embodiment of the present application.

FIG. 10 is a diagram illustrating the structure of an image dataset processing apparatus according to an embodiment of the present application.

FIG. 11 is a diagram illustrating the structure of an electronic device according to an embodiment of the present application.

DETAILED DESCRIPTION

Embodiments of the present application are described in more detail hereinafter with reference to the drawings. Although some embodiments of the present application are shown in the drawings, it is to be understood that the present application may be implemented in various forms and should not be construed as being limited to the embodiments set forth herein. Rather, these embodiments are provided so that the present application can be thoroughly and completely understood. It is to be understood that the drawings and embodiments of the present application are illustrative and are not intended to limit the scope of the present application.

It is to be understood that the various steps recited in the method embodiments of the present application may be performed in a different order, and/or in parallel. Additionally, the method embodiments may include an additional step and/or omit performing an illustrated step. The scope of the present application is not limited in this respect.

As used herein, the term "comprise" and variations thereof are intended to be inclusive, that is, "including, but not limited to". The term "based on" is "at least partially based on". The term "an embodiment" refers to "at least one embodiment"; the term "another embodiment" refers to "at least one another embodiment"; the term "some embodiments" refers to "at least some embodiments". Related definitions of other terms are given in the description hereinafter.

It is to be noted that references to "first", "second" and the like in the present application are merely intended to distinguish one from another apparatus, module or unit and are not intended to limit the order or interrelationship of the functions performed by the apparatus, module or unit.

It is to be noted that "one" and "a plurality" mentioned in the present application are illustrative and not limiting, and that those skilled in the art should understand that "one" and "a plurality" should be understood as "one or more" unless clearly expressed in the context.

It is to be understood that data (including, but not limited to, the data itself and acquisition or use of the data) involved in the solutions should comply with corresponding laws and regulations and relevant provisions.

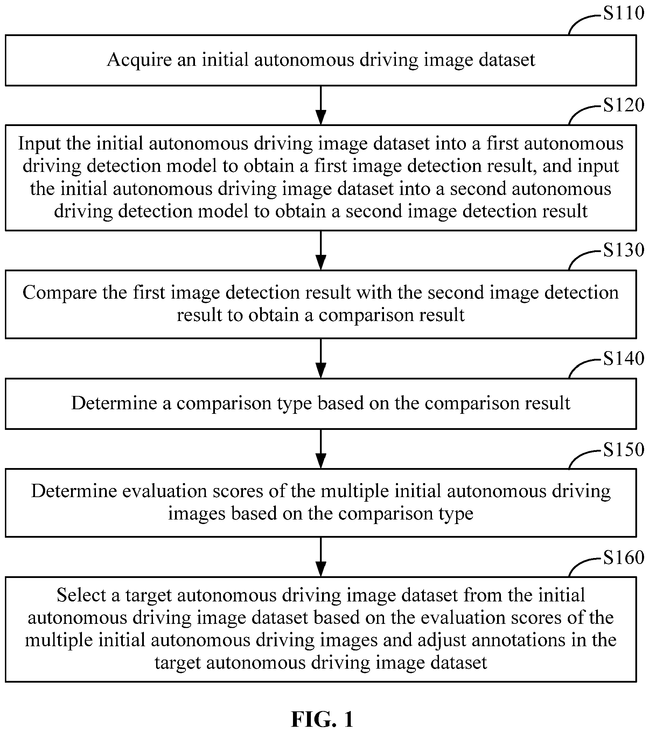

FIG. 1 is a flowchart of an image dataset processing method according to an embodiment of the present application. This embodiment can be applied to the scenario of selecting a target autonomous driving image dataset from the initial autonomous driving image dataset. It is to be noted that this embodiment is not limited to the forward-looking camera scene target detection tasks in autonomous driving, but can also be applied to other scene tasks. When switching scene tasks, the relevant configuration information can be modified based on model capabilities and project requirements. In this embodiment, the scenario of selecting the target autonomous driving image dataset from the initial dataset can also be understood as a data mining process. The goal is to identify the most valuable and difficult samples from the vast amount of data, prioritize their annotation, and accelerate model iteration. The method can be executed by an image dataset processing apparatus. The method includes S110 to S160.

In S110, an initial autonomous driving image dataset is acquired.

The initial autonomous driving image dataset includes multiple initial autonomous driving images and corresponding annotations. The annotations include information about, for example, detection box information, category, confidence level, and area corresponding to the initial autonomous driving images. When this embodiment is applied to 3D scene tasks, the area is a 3D target volume or a projection area.

The initial autonomous driving images may be collected by high-level autonomous driving test vehicles. The autonomous driving image dataset may include annotations or may not include annotations. This is not limited in this embodiment.

In S120, the initial autonomous driving image dataset is input into a first autonomous driving detection model to obtain a first image detection result, and the initial autonomous driving image dataset is input into a second autonomous driving detection model to obtain a second image detection result.

The first autonomous driving detection model may be a server-side model that has sufficient computing power and can perform offline processing. The server-side model is also referred to as a large-scale model. The second autonomous driving detection model may be an edge-side model that has limited computing power and high demands for real-time performance. The edge-side model is also referred to as a small-scale model.

Optionally, each of the multiple initial autonomous driving images includes at least one target object; the first image detection result includes first detection box information of at least one of the at least one target object, a respective first category corresponding to each of the at least one of the at least one target object, a first confidence level of the first category, and a first area corresponding to the first detection box information; and the second image detection result includes second detection box information of at least one of the at least one target object, a respective second category corresponding to each of the at least one of the at least one target object, a second confidence level of the second category, and a second area corresponding to the second detection box information.

The target object may be, for example, a vehicle, a barrier, a pedestrian, or a building. This is not limited in this embodiment. The detection box information may include the length, width, and height of a detection box.

In S130, the first image detection result and the second image detection result are compared to obtain a comparison result.

In this embodiment, the first image detection result serves as a reference detection result. It is possible to compare the first image detection result with the second image detection result to obtain a comparison result. The comparison result includes match and mismatch.

Optionally, the comparison result includes a category comparison result; and comparing the first image detection result with the second image detection result to obtain the comparison result includes comparing the first category with the second category to obtain the category comparison result. The category comparison result includes category match and category mismatch.

In this embodiment, it is feasible to compare the first category with the second category to obtain the category comparison result and determine the comparison type based on the category comparison result.

In S140, a comparison type is determined based on the comparison result.

The comparison type includes true positive (TP), false positive (FP), and false negative (FN). For example, if the category comparison result is match, the comparison type is true positive; and if the category comparison result is mismatch, the comparison type is false positive or false negative.

Optionally, determining the comparison type based on the comparison result includes determining an Intersection over Union (IoU) based on the first detection box information and the second detection box information; determining a first set IoU value based on the first area and/or the second area; in response to the IoU being greater than or equal to the first set IoU value and the category comparison result being category match, determining the comparison type as true positive; and in response to the IoU being less than the first set IoU value and/or the category comparison result being category mismatch, determining the comparison type as false positive and false negative. Alternatively, determining the comparison type based on the comparison result includes: for one target object of the at least one target object, in response to the first image detection result including the first detection box information of the one target object while the second image detection result not including the second detection box information of the target object, determining the comparison type as false negative; and in response to the first image detection result not including the first detection box information of the target object while the second image detection result including the second detection box information of the target object, determining the comparison type as false positive.

In this embodiment, it is feasible to determine the IoU based on the first detection box information and the second detection box information and determine the size of the target object based on the first area and/or the second area. If the first area and/or the second area is less than 32*32, the target object is a small target, and the corresponding first set IoU value may be 0.3. If the first area and/or the second area is greater than or equal to 32*32, the target object is a normal target, and the corresponding first set IoU value may be 0.5.

If the IoU is greater than or equal to the first set IoU value and the category comparison result is category match, the comparison type is determined as true positive. If the IoU is less than the first set IoU value and/or the category comparison result is the category mismatch, the comparison type is determined as false positive and false negative. Alternatively, if the first image detection result includes the first detection box information of the at least one target object while the second image detection result does not include the second detection box information of the at least one target object, the comparison type is determined as false negative. That is, the extra detection boxes in the first image detection result compared to the second image detection result are all classified as false negatives in terms of the comparison type. If the first image detection result does not include the first detection box information of the at least one target object while the second image detection result includes the second detection box information of the at least one target object, the comparison type is determined as false positive. That is, the extra detection boxes in the second image detection result compared to the first image detection result are all classified as false positives in terms of the comparison type.

In this embodiment, it is possible to accurately determine the comparison type by determining the comparison type based on the comparison result and the IoU or by determining whether the first image detection result and the second image detection result include detection box information of the same target object.

In S150, evaluation scores of the multiple initial autonomous driving images are determined based on the comparison type.

In this embodiment, for each initial autonomous driving image, the evaluation score of the initial autonomous driving image is determined as follows: The evaluation scores of all target objects in the initial autonomous driving image are determined based on the comparison type. The evaluation scores of all target objects include the IoU score, confidence score, area score, and category score. The evaluation score of the initial autonomous driving image is obtained based on the evaluation scores of all target objects and the scene score of the initial autonomous driving image. In this manner, the evaluation scores of all initial autonomous driving images are obtained.

In S160, a target autonomous driving image dataset is selected from the initial autonomous driving image dataset based on the evaluation scores of the multiple initial autonomous driving images, and annotations in the target autonomous driving image dataset are adjusted.

In this embodiment, the target autonomous driving image dataset may be selected from the initial autonomous driving image dataset based on the evaluation scores of the multiple initial autonomous driving images. The target autonomous driving image dataset may be understood as a dataset having a significant impact on the detection accuracy of the second autonomous driving detection model (or other autonomous driving detection models) or may be understood as a dataset having a high target value. It is possible to improve the detection accuracy of the autonomous driving detection model by adjusting the annotations in the target autonomous driving image dataset.

In this embodiment, a comparison between two models and pairwise comparisons among multiple models are both allowed. It is feasible to obtain the final value score of the initial autonomous driving image by taking the maximum value score from the value scores of the initial autonomous driving image or by performing a score fusion operation on the value scores of the initial autonomous driving image.

In this embodiment, it is also feasible to use one model, but forward computation in two different modes is required in obtaining two different sets of detection results. The two modes are, for example, the test time augmentation mode and the normal mode.

The solution of this embodiment of the present application includes acquiring an initial autonomous driving image dataset, where the initial autonomous driving image dataset includes multiple initial autonomous driving images and corresponding annotations; inputting the initial autonomous driving image dataset into a first autonomous driving detection model to obtain a first image detection result and inputting the initial autonomous driving image dataset into a second autonomous driving detection model to obtain a second image detection result; comparing the first image detection result with the second image detection result to obtain a comparison result, where the first image detection result serves as a reference detection result; determining a comparison type based on the comparison result, where the comparison type includes true positive, false positive, and false negative; determining evaluation scores of the multiple initial autonomous driving images based on the comparison type; and selecting a target autonomous driving image dataset from the initial autonomous driving image dataset based on the evaluation scores of the multiple initial autonomous driving images and adjusting annotations in the target autonomous driving image dataset. In this embodiment of the present application, the following operations are performed: determining a comparison type based on the comparison result between the first image detection result and the second image detection result; determining evaluation scores of the multiple initial autonomous driving images based on the comparison type; and selecting a target autonomous driving image dataset based on the evaluation scores of the multiple initial autonomous driving images. This can improve the accuracy of image dataset processing.

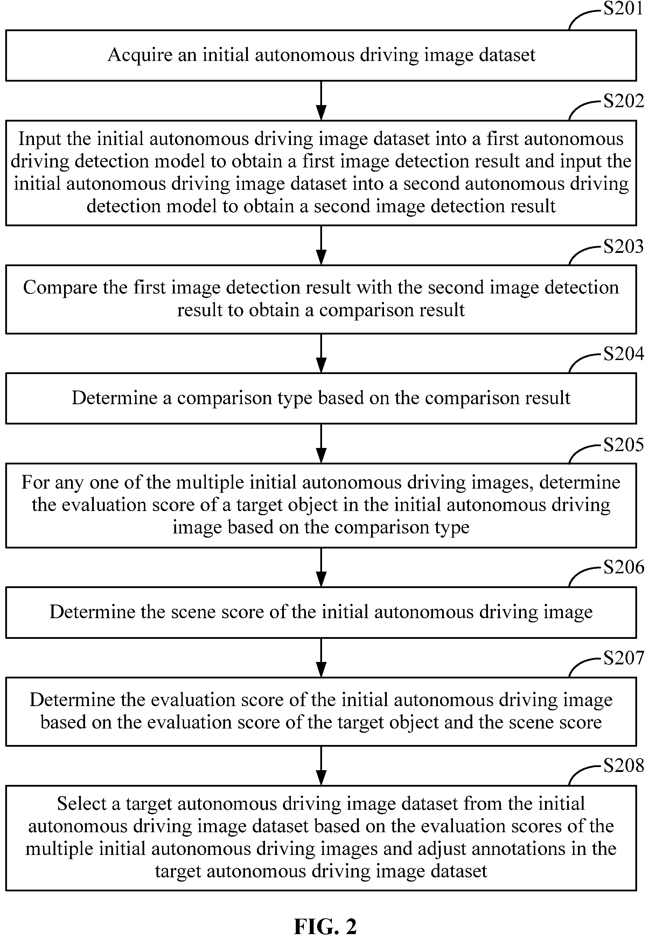

FIG. 2 is a flowchart of an image dataset processing method according to an embodiment of the present application. This embodiment of the present application is based on the previous embodiments of the present application. Referring to FIG. 2, the method of this embodiment of the present application includes S201 to S208.

In S201, an initial autonomous driving image dataset is acquired.

In S202, the initial autonomous driving image dataset is input into a first autonomous driving detection model to obtain a first image detection result, and the initial autonomous driving image dataset is input into a second autonomous driving detection model to obtain a second image detection result.

In S203, the first image detection result and the second image detection result are compared to obtain a comparison result.

In S204, a comparison type is determined based on the comparison result.

In S205, for any one of the multiple initial autonomous driving images, the evaluation score of a target object in the initial autonomous driving image is determined based on the comparison type.

The evaluation scores of the target objects include the IoU score, confidence score, area score, and category score. In this embodiment, different comparison types result in different evaluation scores of the target objects. All or some of the target objects in the initial autonomous driving image may be obtained based on the comparison type.

Optionally, determining the evaluation score of the target object in the initial autonomous driving image based on the comparison type includes determining at least one of the IoU score, the confidence score, or the area score of the target object based on the comparison type; acquiring a preset category score corresponding to the at least one target object; and determining the evaluation score of the target object based on at least one of the IoU score, the confidence score, the area score, or the category score.

In this embodiment, for each target object in the initial autonomous driving image, it is feasible to obtain the evaluation score of the target object by obtaining the IoU score, the confidence score, and the area score of the target object separately based on the comparison type; acquiring a preset category score of the target object; multiplying the IoU score, the confidence score, the area score, and the category score or calculating a weighted average of the IoU score, the confidence score, the area score, and the category score and using the result of multiplication or the result of weighted average calculation as the evaluation score of the target object. In this embodiment, the evaluation score of the target object may be determined based on elements more or fewer than the IoU score, the confidence score, the area score, and the category score.

A category weight, that is, category score, is preset for the category of each target object. The range of the category score is [0, 1]. After the category of the target object is predicted, the category score corresponding to the predicted category may be obtained. For the category weight, the distribution information of the initial autonomous driving image dataset may be incorporated. For the long-tail portion, a higher category weight may be set. Additionally, the evaluation result of the model on the test set may be incorporated. For a category with lower accuracy, the weight may be increased.

In this embodiment, it is possible to accurately determine the evaluation score of the target object based on at least one of the IoU score, the confidence score, the area score, or the category score.

Optionally, determining the IoU score of the target object based on the comparison type includes determining a second set IoU value based on the first area and/or the second area, where the second set IoU value is greater than the first set IoU value; and determining an IoU evaluation score based on the comparison type, the first set IoU value, the second set IoU value, and the IoU.

The second set IoU value is greater than the first set IoU value. The second set IoU value may be understood as the maximum IoU threshold. The first set IoU value may be understood as the minimum IoU threshold. In this embodiment, it is feasible to determine the size of the target object based on the first area and/or the second area. If the first area and/or the second area is less than 32*32, the target object is a small target, and the corresponding second set IoU value may be 0.7. If the first area and/or the second area is greater than or equal to 32*32, the target object is a normal target, and the corresponding first set IoU value may be 0.9.

Illustratively, the formula for the IoU threshold is as follows:

$$iou\_thresh = \begin{cases} [0.3, 0.7], & area < 32 * 32 \text{ (the target object is a small target)} \\ [0.5, 0.9], & area \geq 32 * 32 \text{ (the target object is a normal target)} \end{cases}$$

iou_thresh denotes the IoU threshold. When the target object is a small object, the first set IoU value may be 0.3, and the second set IoU value may be 0.7. When the target object is a normal object, the first set IoU value may be 0.5, and the second set IoU value may be 0.9.

If the comparison type is false positive or false negative and if the IoU is less than the first set IoU value, the IoU evaluation score can be directly obtained. If the comparison type is true positive and if the IoU is greater than or equal to the second set IoU value, the IoU evaluation score can be directly obtained. If the comparison type is true positive and the IoU falls within the interval defined by the first set IoU value and the second set IoU value, the IoU evaluation score may be determined based on the first set IoU value, the second set IoU value, and the IoU.

In this embodiment, it is possible to accurately determine the IoU evaluation score based on the comparison type, the first set IoU value, the second set IoU value, and the IoU.

Optionally, determining the IoU evaluation score based on the comparison type, the first set IoU value, the second set IoU value, and the IoU includes, in response to the comparison type being false positive or false negative and the IoU being less than the first set IoU value, determining that the IoU evaluation score is a first set IoU evaluation score; in response to the comparison type being true positive and the IoU being greater than or equal to the second set IoU value, determining that the IoU evaluation score is a second set IoU evaluation score; and in response to the comparison type being true positive and the IoU falling within the interval defined by the first set IoU value and the second set IoU value, determining a first IoU evaluation score based on the second set IoU value and the IoU; determining a second IoU evaluation score based on the first set IoU value and the second set IoU value; and determining the IoU evaluation score based on the first IoU evaluation score and the second IoU evaluation score.

Illustratively, the formula for the IoU evaluation score is as follows:

$$iou\_score = \begin{cases} 1, & iou < min\_iou \ (FP\text{或}FN) \\ \frac{\max\_iou - iou}{\max\_iou - \min\_iou}, & min\_iou \leq iou < \max\_iou \ (TP) \\ 0, & iou \geq \max\_iou \ (TP) \end{cases}$$

iou_score denotes the IoU evaluation score. min_iou denotes the first set IoU value. max_iou denotes the second set IoU value. iou denotes the Intersection over Union. The first set IoU evaluation score is 1. The second set IoU evaluation score is 0.

When the comparison type is false positive or false negative and the IoU is less than the first set IoU value, the value is the highest, and the IoU evaluation score is 1. When the comparison type is true positive and the IoU is greater than or equal to the second set IoU value, the model is not required to focus on minor edge differences, there is no value, and the IoU evaluation score is 0. When the comparison type is true positive and the IoU falls within the interval defined by the first set IoU value and the second set IoU value, a lower IoU results in a higher value, the first IoU evaluation score is max_iou-iou, the second IoU evaluation score is max_iou-min_iou, and the IoU is $\dfrac{max\_iou-iou}{max\_iou-min\_iou}$.

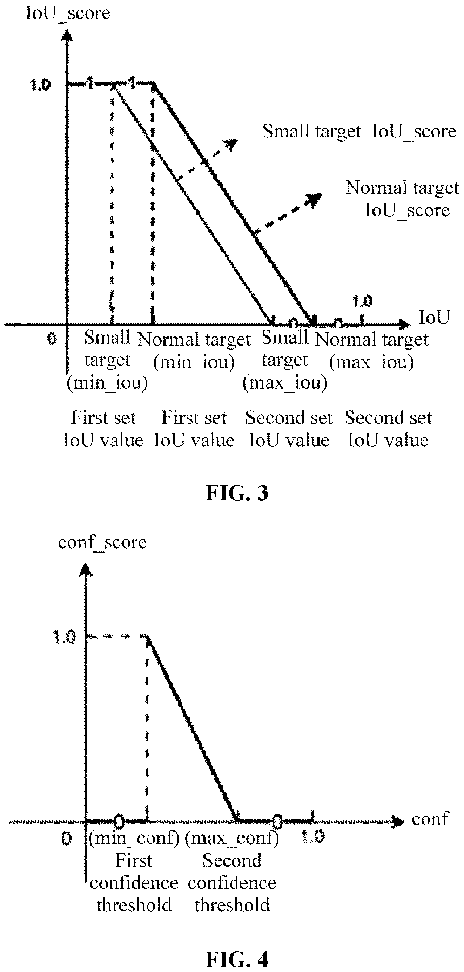

FIG. 3 is a diagram illustrating the effect between an IoU and an IoU evaluation score according to an embodiment of the present application. As shown in FIG. 3, the horizontal axis represents the IoU, and the vertical axis represents the IoU_score. It can be seen that the target object is a small target or a normal target, and the IoU is inversely proportional to the IoU_score.

The reason why target objects are differentiated from each other based on their size is that absolute coordinate deviations of the same target position (measured in pixels) have a greater impact on the IoU values of small targets during alignment. Consequently, small targets generally have lower IoU values, leading to higher evaluation scores of these small targets. This contradicts the principle that "larger targets have greater values".

In this embodiment, it is possible to accurately determine the IoU evaluation score by using the first set IoU evaluation score as the IoU evaluation score when the comparison type is false positive or false negative and the IoU is less than the first set IoU value; using the second set IoU evaluation score as the IoU evaluation score when the comparison type is true positive and the IoU is greater than or equal to the second set IoU value; and determining the IoU evaluation score based on the first set IoU evaluation score and the second set IoU evaluation score when the comparison type is true positive and the IoU falls within the interval defined by the first set IoU value and the second set IoU value.

Optionally, determining the confidence score of the target object based on the comparison type includes, in response to the comparison type being false positive, determining a first evaluation score of a second confidence level and using the first evaluation score of the second confidence level as the confidence score of the target object; in response to the comparison type being false negative, determining a first evaluation score of a first confidence level and using the first evaluation score of the first confidence level as the confidence score of the target object; and in response to the comparison type being true positive, determining a second evaluation score of the first confidence level and a second evaluation score of the second confidence level and determining the confidence score of the target object based on the second evaluation score of the first confidence level and the second evaluation score of the second confidence level.

Illustratively, the formula for the confidence score of the target object is as follows:

$$matched\_conf\_score = \begin{cases} conf\_score_{small1}, & (FP) \\ \dfrac{conf\_score_{big2}+conf\_score_{small2}}{2}, & (TP) \\ conf\_score_{big1}, & (FN) \end{cases}$$

matched_conf_score denotes the confidence score of the target object. $conf\_score_{small1}$ denotes the first evaluation score of the second confidence level in the case of a comparison type of false positive, that is, the confidence score of the target object in the case of a comparison type of false positive. $conf\_score_{big1}$ denotes the first evaluation score of the first confidence level in the case of a comparison type of false negative, that is, the confidence score of the target object in the case of a comparison type of false negative. $\dfrac{conf\_score_{big2}+conf\_score_{small2}}{2}$ denotes the confidence score of the target object in the case of a comparison type of true positive. $conf\_score_{big2}$ denotes the second evaluation score of the first confidence level. $conf\_score_{small2}$ denotes the second evaluation score of the second confidence level.

In this embodiment, it is possible to accurately determine the confidence score of the target object by determining the first evaluation score of the second confidence level output by the second autonomous driving detection model and using the first evaluation score of the second confidence level as the confidence score of the target object when the comparison type is false positive; determining the first evaluation score of the first confidence level output by the first autonomous driving detection model and using the first evaluation score of the first confidence level as the confidence score of the target object when the comparison type is false negative; and determining the second evaluation score of the first confidence level and the second evaluation score of the second confidence level and determining the confidence score of the target object based on the second evaluation score of the first confidence level and the second evaluation score of the second confidence level when the comparison type is true positive.

Optionally, determining the first evaluation score of the first confidence level or determining the first evaluation score of the second confidence level includes acquiring a first confidence threshold and a second confidence threshold, where the second confidence threshold is greater than the first confidence threshold; in response to the first confidence level or the second confidence level being less than the first confidence threshold, using a first set confidence score as the first evaluation score of the first confidence level or the first evaluation score of the second confidence level; in response to the first confidence level being greater than or equal to the second confidence threshold or the second confidence level being greater than or equal to the second confidence threshold, using a second set confidence score as the first evaluation score of the first confidence level or the first evaluation score of the second confidence level; and in response to the first confidence level falling within the interval defined by the first confidence threshold and the second confidence threshold, determining a first confidence score based on the first confidence level, the second confidence threshold, and the first confidence threshold; determining a second confidence score based on the second confidence threshold and the first confidence threshold; and determining the first evaluation score of the first confidence level based on the first confidence score and the second confidence score; or in response to the second confidence level falling within the interval defined by the first confidence threshold and the second confidence threshold, determining a third confidence score based on the second confidence level, the second confidence threshold, and the first confidence threshold; determining a fourth confidence score based on the second confidence threshold and the first confidence threshold; and determining the first evaluation score of the second confidence level based on the third confidence score and the fourth confidence score.

Illustratively, the formula for determining the first evaluation score of the second confidence level in the case of a comparison type of FP is as follows:

$$conf\_score_{small1} =$$

$$\begin{cases} 0, \ conf < \min\_conf \\ \dfrac{0.5 * (\text{conf} + \max\_conf) - \min\_conf}{\max\_conf - \min\_conf}, \ \min\_conf \le conf < \max\_conf \\ 1, \ conf \ge \max\_conf \end{cases}$$

The second confidence threshold may be 0.5. The first confidence threshold may be 0.3. The first set confidence score may be 0. The second set confidence score may be 1.

When the comparison type is false positive, conf denotes the second confidence level. If the second confidence level is less than the first confidence threshold, the first evaluation score of the second confidence level is 0, indicating no value. If the second confidence level is greater than or equal to the second confidence threshold, the first evaluation score of the second confidence level is 1, indicating the maximum value. If the second confidence level falls within the interval defined by the first confidence threshold and the second confidence threshold, $\dfrac{0.5 * (conf + max\_conf) - min\_conf}{max\_conf - min\_conf}$ denotes the first evaluation score of the second confidence level.

In this embodiment, it is possible to accurately determine the first evaluation score of the second confidence level by using the first set confidence score as the first evaluation score of the second confidence level if the second confidence level is less than the first confidence threshold; using the second set confidence score as the first evaluation score of the second confidence level if the second confidence level is greater than or equal to the second confidence threshold; and determining the first evaluation score of the second confidence level based on the third confidence score and the fourth confidence score if the second confidence level falls within the interval defined by the first confidence threshold and the second confidence threshold.

Illustratively, the formula for determining the first evaluation score of the first confidence level in the case of a comparison type of FN is as follows:

$$conf\_score_{big1} = \begin{cases} 0, \ conf < \min\_conf \\ \dfrac{0.5 * (\text{conf} + \max\_conf) - \min\_conf}{\max\_conf - \min\_conf}, \ \min\_conf \le conf < \max\_conf \\ 1, \ conf \ge \max\_conf \end{cases}$$

When the comparison type is false negative, conf denotes the first confidence level. If the first confidence level is less than the first confidence threshold, the first evaluation score of the first confidence level is 0, indicating no value. If the first confidence level is greater than or equal to the second confidence threshold, the first evaluation score of the first confidence level is 1, indicating the maximum value. If the first confidence level falls within the interval defined by the first confidence threshold and the second confidence threshold, $\dfrac{0.5 * (conf + max\_conf) - min\_conf}{max\_conf - min\_conf}$ denotes the first evaluation score of the first confidence level.

In this embodiment, it is possible to accurately determine the first evaluation score of the first confidence level by using the first set confidence score as the first evaluation score of the first confidence level if the first confidence level is less than the first confidence threshold; using the second set confidence score as the first evaluation score of the first confidence level if the first confidence level is greater than or equal to the second confidence threshold; and determining the first evaluation score of the first confidence level based on the first confidence score and the second confidence score if the first confidence level falls within the interval defined by the first confidence threshold and the second confidence threshold.

Optionally, determining the second evaluation score of the first confidence level or determining the second evaluation score of the second confidence level includes, in response to the first confidence level or the second confidence level being less than the first confidence threshold, using the first set confidence score as the second evaluation score of the first confidence level or the second evaluation score of the second confidence level; in response to the first confidence level being greater than or equal to the first confidence threshold or the second confidence level being greater than or equal to the second confidence threshold, using the first set confidence score as the second evaluation score of the first confidence level or the second evaluation score of the second confidence level; and in response to the first confidence level falling within the interval defined by the first confidence threshold and the second confidence threshold, determining a fifth confidence score based on the first confidence level and the second confidence threshold; determining a sixth confidence score based on the second confidence threshold and the first confidence threshold; and determining the second evaluation score of the first confidence level based on the fifth confidence score and the sixth confidence score; or in response to the second confidence level falling within the interval defined by the first confidence threshold and the second confidence threshold, determining a seventh confidence score based on the second confidence level and the second confidence threshold; determining an eighth confidence score based on the second confidence threshold and the first confidence threshold; and determining the second evaluation score of the second confidence level based on the seventh confidence score and the eighth confidence score.

Illustratively, the formula for determining the second evaluation score of the second confidence level in the case of a comparison type of true positive is as follows:

$$conf\_score_{small2} = \begin{cases} 0, & conf1 < \min\_conf \\ \frac{\max\_conf - conf1}{\max\_conf - \min\_conf}, & \min\_conf \le conf1 < \max\_conf \\ 0, & conf1 \ge \max\_conf \end{cases}$$

When the comparison type is true positive, conf1 denotes the second confidence level. If the second confidence level is less than the first confidence threshold, the second evaluation score of the second confidence level is 0, indicating no value. If the second confidence level is greater than or equal to the second confidence threshold, the second evaluation score of the second confidence level is 0, indicating no value. If the second confidence level falls within the interval defined by the first confidence threshold and the second confidence threshold, $\frac{max\_conf - conf1}{max\_conf - min\_conf}$ denotes the second evaluation score of the second confidence level.

In this embodiment, it is possible to accurately determine the second evaluation score of the second confidence level by using the first set confidence score as the second evaluation score of the second confidence level if the second confidence level is less than the first confidence threshold; using the first set confidence score as the second evaluation score of the second confidence level if the second confidence level is greater than or equal to the second confidence threshold; and determining the second evaluation score of the second confidence level based on the seventh confidence score and the eighth confidence score if the second confidence level falls within the interval defined by the first confidence threshold and the second confidence threshold.

Illustratively, the formula for determining the second evaluation score of the first confidence level in the case of a comparison type of true positive is as follows:

$$conf\_score_{big2} = \begin{cases} 0, & conf2 < \min\_conf \\ \frac{\max\_conf - conf2}{\max\_conf - \min\_conf}, & \min\_conf \le conf2 < \max\_conf \\ 0, & conf2 \ge \max\_conf \end{cases}$$

When the comparison type is true positive, conf2 denotes the first confidence level. If the first confidence level is less than the first confidence threshold, the second evaluation score of the first confidence level is 0. If the first confidence level is greater than or equal to the first confidence threshold, the second evaluation score of the first confidence level is 0. If the first confidence level falls within the interval defined by the first confidence threshold and the second confidence threshold, $\frac{max\_conf - conf2}{max\_conf - min\_conf}$ denotes the second evaluation score of the first confidence level.

In this embodiment, it is possible to accurately determine the second evaluation score of the first confidence level by using the first set confidence score as the second evaluation score of the first confidence level if the first confidence level is less than the first confidence threshold; using the first set confidence score as the second evaluation score of the first confidence level if the first confidence level is greater than or equal to the first confidence threshold; and determining the second evaluation score of the first confidence level based on the fifth confidence score and the sixth confidence score if the first confidence level falls within the interval defined by the first confidence threshold and the second confidence threshold.

FIG. 4 is a diagram illustrating the effect between a confidence level and a second evaluation score according to an embodiment of the present application. As shown in FIG. 4, in the case of a comparison type of true positive, the horizontal axis represents conf, that is, the first confidence level or the second confidence level, min_conf denotes the first confidence threshold, max_conf denotes the second confidence threshold, the vertical axis represents conf_score, that is, the second evaluation score of the first confidence level or the second evaluation score of the second confidence level. When the first confidence level or the second confidence level is less than the first confidence threshold or greater than or equal to the second confidence threshold, the second evaluation score is 0, indicating no value. When conf is between the first confidence threshold and the second confidence threshold, the second evaluation score (understood as the value) is inversely proportional to the confidence level.

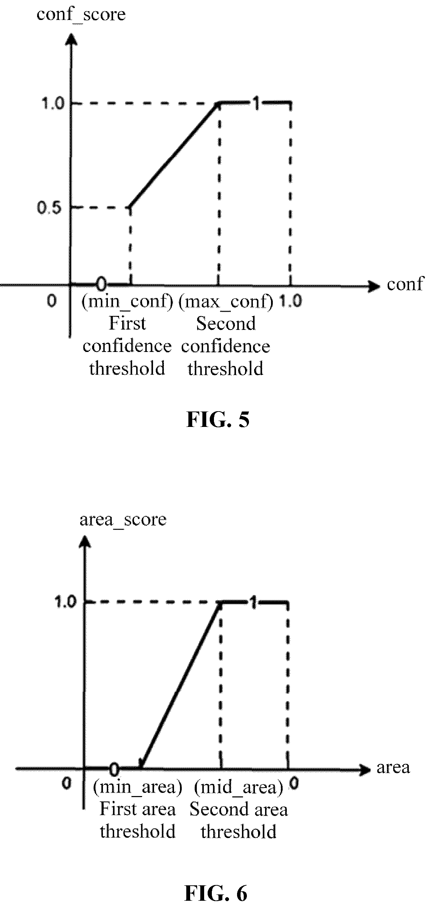

FIG. 5 is a diagram illustrating the effect between a confidence level and a first evaluation score according to an embodiment of the present application. As shown in FIG. 5, in the case of a comparison type of false negative or false positive, the horizontal axis represents conf, that is, the first confidence level or the second confidence level, min_conf denotes the first confidence threshold, max_conf denotes the second confidence threshold, the vertical axis represents conf_score, that is, the first evaluation score of the first confidence level or the first evaluation score of the second confidence level. If the first confidence level or the second confidence level is less than the first confidence threshold, the first evaluation score is 0, indicating no value. When the first confidence level or the second confidence level is greater than or equal to the second confidence threshold, the first evaluation score is 1, indicating the maximum value. When conf is between the first confidence threshold and the second confidence threshold, the first evaluation score (understood as the value) is directly proportional to the confidence level.

Optionally, determining the area score of the target object based on the comparison type includes, in response to the comparison type being false positive, determining a first evaluation score of the second area and using the first evaluation score of the second area as the area score of the target object; in response to the comparison type being false negative, determining a first evaluation score of the first area and using the first evaluation score of the first area as the area score of the target object; and in response to the comparison type being true positive, determining a second evaluation score of the first area and a second evaluation score of the second area and determining the area score of the target object based on the second evaluation score of the first area and the second evaluation score of the second area.

Illustratively, the formula for the area score of the target object is as follows:

$$matched\_area\_score = \begin{cases} area\_score_{small1}, & (FP) \\ \frac{area\_score_{big2} + area\_score_{small2}}{2}, & (TP) \\ area\_score_{big1}, & (FN) \end{cases}$$

matched_area_score denotes the area score of the target object. $area\_score_{small1}$ denotes the first evaluation score of the second area in the case of a comparison type of false positive, that is, the area score of the target object in the case of a comparison type of false positive. $area\_score_{big1}$ denotes the first evaluation score of the first area in the case of a comparison type of false negative, that is, the area score of the target object in the case of a comparison type of false negative. $\frac{area\_score_{big2} + area\_score_{small2}}{2}$ denotes the area score of the target object in the case of a comparison type of true positive. $area\_score_{big2}$ denotes the second evaluation score of the first area. $area\_score_{small2}$ denotes the second evaluation score of the second area.

In this embodiment, it is possible to accurately determine the area score of the target object by determining the first evaluation score of the second area and using the first evaluation score of the second area as the area score of the target object when the comparison type is false positive; determining the first evaluation score of the first area and using the first evaluation score of the first area as the area score of the target object when the comparison type is false negative; and determining the area score of the target object based on the second evaluation score of the first area and the second evaluation score of the second area when the comparison type is true positive.

Optionally, determining the first evaluation score of the first area or determining the first evaluation score of the second area includes acquiring a first area threshold and a second area threshold, where the second area threshold is greater than the first area threshold; in response to the first area or the second area being less than the first area threshold, using a first set area score as the first evaluation score of the first area or the first evaluation score of the second area; in response to the first area being greater than or equal to the second area threshold or the second area being greater than or equal to the second area threshold, using a second set area score as the first evaluation score of the first area or the first evaluation score of the second area; and in response to the first area falling within the interval defined by the first area threshold and the second area threshold, determining a first area score based on the first area, the second area threshold, and the first area threshold; determining a second area score based on the second area threshold and the first area threshold; and determining the first evaluation score of the first area based on the first area score and the second area score; or in response to the second area falling within the interval defined by the first area threshold and the second area threshold, determining a third area score based on the second area, the second area threshold, and the first area threshold; determining a fourth area score based on the second area threshold and the first area threshold; and determining the first evaluation score of the second area based on the third area score and the fourth area score.

The first area threshold may be 30*30. The second area threshold may be 500*500. The first set area score may be 0. The second set area score may be 1.

Illustratively, the formula for determining the first evaluation score of the first area in the case of a comparison type of FN is as follows:

$$area\_score_{big1} == \begin{cases} 0, & area < \min\_area \\ \frac{0.5*(\text{area}+\max\_area)-\min\_area}{\max\_area-\min\_area}, & \min\_area \leq area < \max\_area \\ 1, & area \geq \max\_area \end{cases}$$

When the comparison type is false negative, area denotes the first area. If the first area is less than the first area threshold, the first evaluation score of the first area is 0. If the first area is greater than or equal to the second area threshold, the first evaluation score of the first area is 1. If the first area falls within the interval defined by the first area threshold and the second area threshold, $\frac{0.5*(\text{area}+\max\_area)-\min\_area}{\max\_area-\min\_area}$ denotes the first evaluation score of the first area.

In this embodiment, it is possible to accurately determine the first evaluation score of the first area by using the first set area score as the first evaluation score of the first area if the first area is less than the first area threshold; using the second set area score as the first evaluation score of the first area if the first area is greater than or equal to the second area threshold; and determining the first evaluation score of the first area based on the first area score and the second area score if the first area falls within the interval defined by the first area threshold and the second area threshold.

Illustratively, the formula for determining the first evaluation score of the second area in the case of a comparison type of FP is as follows:

$$area\_score_{small1} = \begin{cases} 0, & area < \min\_area \\ \frac{0.5*(\text{area}+\max\_area)-\min\_area}{\max\_area-\min\_area}, & \min\_area \leq area < \max\_area \\ 1, & area \geq \max\_area \end{cases}$$

When the comparison type is false positive, area denotes the second area. If the second area is less than the first area threshold, the first evaluation score of the second area is 0. If the second area is greater than or equal to the second area threshold, the first evaluation score of the second area is 1. If the second area falls within the interval defined by the first area threshold and the second area threshold, $\frac{0.5*(\text{area}+\max\_area)-\min\_area}{\max\_area-\min\_area}$ denotes the first evaluation score of the second area.

In this embodiment, it is possible to accurately determine the first evaluation score of the second area by using the first set area score as the first evaluation score of the second area if the second area is less than the first area threshold; using the second set area score as the first evaluation score of the second area if the second area is greater than or equal to the second area threshold; and determining the first evaluation score of the second area based on the third area score and the fourth area score if the second area falls within the interval defined by the first area threshold and the second area threshold.

Optionally, determining the second evaluation score of the first area or determining the second evaluation score of the second area includes in response to the first area or the second area being less than the first area threshold, using the first set area score as the second evaluation score of the first area or the second evaluation score of the second area; in response to the first area being greater than or equal to the first area threshold or the second area being greater than or equal to the first area threshold, using the second set area score as the second evaluation score of the first area or the second evaluation score of the second area; and in response to the first area falling within the interval defined by the first area threshold and the second area threshold, determining a fifth area score based on the first area and the first area threshold; determining a sixth area score based on the second area threshold and the first area threshold; and determining the second evaluation score of the first area based on the fifth area score and the sixth area score; or in response to the second area falling within the interval defined by the first area threshold and the second area threshold, determining a seventh area score based on the second area and the first area threshold; determining an eighth area score based on the second area threshold and the first area threshold; and determining the second evaluation score of the second area based on the seventh area score and the eighth area score.

Illustratively, the formula for determining the second evaluation score of the first area in the case of a comparison type of true positive is as follows:

$$area\_score_{big2} = \begin{cases} 0, & area1 < min\_area \\ \frac{area1 - min\_area}{max\_area - min\_area}, & min\_area \leq area1 < max\_area \\ 1, & area1 \geq max\_area \end{cases}$$

When the comparison type is true positive, conf2 denotes the first area. If the first area is less than the first area threshold, the second evaluation score of the first area is 0. If the first area is greater than or equal to the first area threshold, the second evaluation score of the first area is 1. If the first area falls within the interval defined by the first area threshold and the second area threshold, $\frac{area1 - min\_area}{max\_area - min\_area}$ denotes the second evaluation score of the first area.

In this embodiment, it is possible to accurately determine the second evaluation score of the first area by using the first set area score as the second evaluation score of the first area if the first area is less than the first area threshold; using the second set area score as the second evaluation score of the first area if the first area is greater than or equal to the first area threshold; and determining the second evaluation score of the first area based on the fifth area score and the sixth area score if the first area falls within the interval defined by the first area threshold and the second area threshold.

Illustratively, the formula for determining the second evaluation score of the second area in the case of a comparison type of true positive is as follows:

$$area\_score_{small2} = \begin{cases} 0, & area2 < min\_area \\ \frac{area2 - min\_area}{max\_area - min\_area}, & min\_area \leq area2 < max\_area \\ 1, & area2 \geq max\_area \end{cases}$$

When the comparison type is true positive, conf2 denotes the second area. If the second area is less than the first area threshold, the second evaluation score of the second area is 0. If the second area is greater than or equal to the first area threshold, the second evaluation score of the second area is 1. If the second area falls within the interval defined by the first area threshold and the second area threshold, $\frac{area2 - min\_area}{max\_area - min\_area}$ denotes the second evaluation score of the second area.

In this embodiment, it is possible to accurately determine the second evaluation score of the second area by using the first set area score as the second evaluation score of the second area if the second area is less than the first area threshold; using the second set area score as the second evaluation score of the second area if the second area is greater than or equal to the first area threshold; and determining the second evaluation score of the second area based on the seventh area score and the eighth area score if the second area falls within the interval defined by the first area threshold and the second area threshold.

FIG. 6 is a diagram illustrating the effect between an area and a second evaluation score according to an embodiment of the present application. As shown in FIG. 6, in the case of a comparison type of true positive, the horizontal axis represents area, that is, the first area or the second area, min_area denotes the first area threshold, max_area denotes the second area threshold, and the vertical axis represents area_score, that is, the second evaluation score. When the first area or the second area is less than the first area threshold, the second evaluation score is 0, indicating no value. When the first area or the second area is greater than or equal to the second area threshold, the second evaluation score is 1, indicating the maximum value. When area is between the first area threshold and the second area threshold, the second evaluation score (understood as the value) is directly proportional to the area.

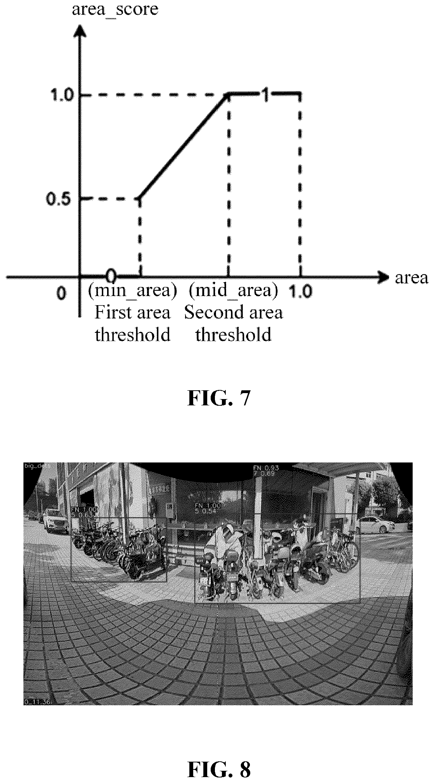

FIG. 7 is a diagram illustrating the effect between an area and a first evaluation score according to an embodiment of the present application. As shown in FIG. 7, in the case of a comparison type of false negative or false positive, the horizontal axis represents area, that is, the first area or the second area, min_area denotes the first area threshold, max_area denotes the second area threshold, and the vertical axis represents area_score, that is, the first evaluation score of the area. When the first area or the second area is less than the first area threshold, the first evaluation score is 0, indicating no value. When the first area or the second area is greater than or equal to the second area threshold, the first evaluation score is 1, indicating the maximum value. When area is between the first area threshold and the second area threshold, the first evaluation score (understood as the value) is directly proportional to the area.

In S206, the scene score of the initial autonomous driving image is determined.

In this embodiment, the initial autonomous driving image involves various scenes such as rainy scenes, snowy scenes, traffic congestion scenes, and off-road scenes.

In this embodiment, it is feasible to acquire the actual scene information based on the initial autonomous driving image, input the initial autonomous driving image into the autonomous driving scene model, output predicted scene information, and determine the scene score based on the level of similarity between the predicted scene information and the actual scene information.

Optionally, determining the scene score of the initial autonomous driving image includes inputting the initial autonomous driving image into an autonomous driving scene model and outputting predicted scene information; acquiring set scene information corresponding to the initial autonomous driving image; determining the level of scene similarity between the predicted scene information and the set scene information; and determining the scene score of the initial autonomous driving image based on the level of scene similarity.

The autonomous driving scene model may be any scene model based on deep learning algorithms. The set scene information may be the actual scene information corresponding to the initial autonomous driving image. In this embodiment, the following operations are performed: inputting the initial autonomous driving image into the autonomous driving scene model and outputting predicted scene information; acquiring set scene information corresponding to the initial autonomous driving image; determining the level of scene similarity between the predicted scene information and the set scene information; and determining the scene score of the initial autonomous driving image based on the level of scene similarity. The range of the level of scene similarity is [0, 1]. That is, the range of the scene score is [0, 1].

In this embodiment, it is possible to accurately determine the scene score of the initial autonomous driving image based on the level of scene similarity between the predicted scene information and the set scene information.

In S207, the evaluation score of the initial autonomous driving image is determined based on the evaluation score of the target object and the scene score.

In this embodiment, the evaluation score of any initial autonomous driving image is calculated as follows: The evaluation scores of all target objects in the current initial autonomous driving image are summed to obtain a cumulative result. Then the cumulative result is multiplied by the scene score to obtain the evaluation score of the current initial autonomous driving image.

Illustratively, the formula for determining the evaluation score of the initial autonomous driving image is as follows:

$$img\_value\_score = scene\_score * \sum_{n=1}^{N} bbox\_value\_score_n$$

img_value_score denotes the evaluation score of the initial autonomous driving image. scene_score denotes the scene score. bbox_value_score denotes the evaluation score of the target object.

In S208, a target autonomous driving image dataset is selected from the initial autonomous driving image dataset based on the evaluation scores of the multiple initial autonomous driving images, and annotations in the target autonomous driving image dataset are adjusted.

In this embodiment, it is feasible to sort the initial autonomous driving images in the initial autonomous driving image dataset in descending order of the evaluation scores of the initial autonomous driving images, select a preset number of top-ranked initial autonomous driving images to serve as a set number of target autonomous driving images, and adjust annotations corresponding to the set number of target autonomous driving images.

Optionally, selecting the target autonomous driving image dataset from the initial autonomous driving image dataset based on the evaluation scores of the multiple initial autonomous driving images includes sorting the multiple initial autonomous driving images based on the evaluation scores of the multiple initial autonomous driving images to obtain a sorted initial autonomous driving image dataset; and selecting the target autonomous driving image dataset from the sorted initial autonomous driving image dataset, where the target autonomous driving image dataset includes a preset number of target autonomous driving images.

It is feasible to sort the initial autonomous driving images in the initial autonomous driving image dataset in descending order of the evaluation scores of the initial autonomous driving images to obtain a sorted initial autonomous driving image set and select a preset number of top-ranked initial autonomous driving images from the sorted initial autonomous driving image set to serve as a set number of target autonomous driving images that constitute a target initial autonomous driving image dataset. Alternatively, it is feasible to sort the initial autonomous driving images in the initial autonomous driving image dataset in ascending order of the evaluation scores of the initial autonomous driving images to obtain a sorted initial autonomous driving image set and select a preset number of lowest-ranked initial autonomous driving images from the sorted initial autonomous driving image set to serve as a set number of target autonomous driving images that constitute a target initial autonomous driving image dataset.

In this embodiment, it is possible to accurately select target autonomous driving images by selecting a set number of target autonomous driving images that constitute a target initial autonomous driving image dataset from a sorted initial autonomous driving image set.

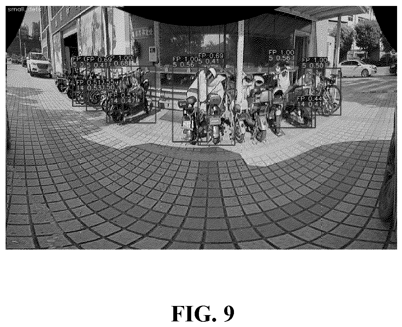

FIG. 8 is a diagram illustrating the effect of a first image detection result according to an embodiment of the present application. FIG. 9 is a diagram illustrating the effect of a second image detection result according to an embodiment of the present application. FIG. 8 illustrates the first image detection result obtained from detection by a first autonomous driving detection model. FIG. 9 illustrates the second image detection result obtained from detection by a second autonomous driving detection model. As can be seen from FIGS. 8 and 9, each group of bicycles detected by the first autonomous driving detection model is surrounded by only one bounding box while each bicycle detected by the second autonomous driving detection model is surrounded by a separate bounding box; therefore, none of the bounding boxes match, and the comparison type is FN or FP. As can be seen from FIGS. 8 and 9, the most distant pole is detected by the first autonomous driving detection model but not by the second autonomous driving detection model, leading to a comparison type of FN and a high evaluation score; therefore, the evaluation scores of the target objects are most FN and FP.

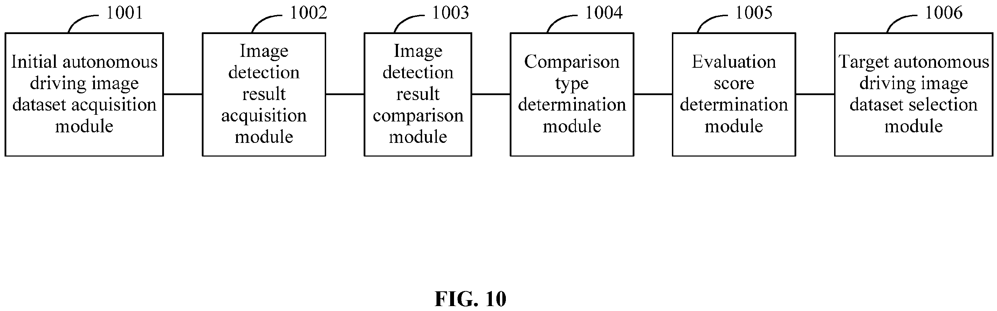

FIG. 10 is a diagram illustrating the structure of an image dataset processing apparatus according to an embodiment of the present application. As shown in FIG. 10, the apparatus includes an initial autonomous driving image dataset acquisition module 1001, an image detection result acquisition module 1002, an image detection result comparison module 1003, a comparison type determination module 1004, an evaluation score determination module 1005, and a target autonomous driving image dataset selection module 1006.

The initial autonomous driving image dataset acquisition module 1001 is configured to acquire an initial autonomous driving image dataset, where the initial autonomous driving image dataset includes multiple initial autonomous driving images and corresponding annotations.

The image detection result acquisition module 1002 is configured to input the initial autonomous driving image dataset into a first autonomous driving detection model to obtain a first image detection result and input the initial autonomous driving image dataset into a second autonomous driving detection model to obtain a second image detection result.

The image detection result comparison module 1003 is configured to compare the first image detection result with the second image detection result to obtain a comparison result, where the first image detection result serves as a reference detection result.

The comparison type determination module 1004 is configured to determine a comparison type based on the comparison result, where the comparison type comprises true positive, false positive, and false negative.

The evaluation score determination module 1005 is configured to determine evaluation scores of the multiple initial autonomous driving images based on the comparison type.

The target autonomous driving image dataset selection module 1006 is configured to select a target autonomous driving image dataset from the initial autonomous driving image dataset based on the evaluation scores of the multiple initial autonomous driving images and adjust annotations in the target autonomous driving image dataset.

In the solution of this embodiment, the initial autonomous driving image dataset acquisition module is configured to acquire an initial autonomous driving image dataset, where the initial autonomous driving image dataset includes multiple initial autonomous driving images and corresponding annotations; the image detection result acquisition module is configured to input the initial autonomous driving image dataset into a first autonomous driving detection model to obtain a first image detection result and input the initial autonomous driving image dataset into a second autonomous driving detection model to obtain a second image detection result; the image detection result comparison module is configured to compare the first image detection result with the second image detection result to obtain a comparison result, where the first image detection result serves as a reference detection result; the comparison type determination module is configured to determine a comparison type based on the comparison result, where the comparison type comprises true positive, false positive, and false negative; the evaluation score determination module is configured to determine evaluation scores of the multiple initial autonomous driving images based on the comparison type; and the target autonomous driving image dataset selection module is configured to select a target autonomous driving image dataset from the initial autonomous driving image dataset based on the evaluation scores of the multiple initial autonomous driving images and adjust annotations in the target autonomous driving image dataset. In this embodiment of the present application, the following operations are performed: determining a comparison type based on the comparison result between the first image detection result and the second image detection result; determining evaluation scores of the multiple initial autonomous driving images based on the comparison type; and selecting a target autonomous driving image dataset based on the evaluation scores of the multiple initial autonomous driving images. This can improve the accuracy of image dataset processing.

Optionally, each of the multiple initial autonomous driving images includes at least one target object; the first image detection result includes first detection box information of the at least one target object, a respective first category corresponding to each of the at least one target object, a first confidence level of the first category, and a first area corresponding to the first detection box information; the second image detection result includes second detection box information of the at least one target object, a respective second category corresponding to each of the at least one target object, a second confidence level of the second category, and a second area corresponding to the second detection box information; and the comparison result includes a category comparison result.

Optionally, the image detection result comparison module is configured to compare the first category with the second category to obtain the category comparison result, where the category comparison result includes category match and category mismatch.

Optionally, the comparison type determination module is configured to determine an Intersection over Union (IoU) based on the first detection box information and the second detection box information; determine a first set IoU value based on the first area and/or the second area; in response to the IoU being greater than or equal to the first set IoU value and the category comparison result being category match, determine the comparison type as true positive; and in response to the IoU being less than the first set IoU value and/or the category comparison result being category mismatch, determine the comparison type as false positive and false negative; or in response to the first image detection result including the first detection box information of the at least one target object while the second image detection result not including the second detection box information of the at least one target object, determine the comparison type as false negative; and in response to the first image detection result not including the first detection box information of the at least one target object while the second image detection result including the second detection box information of the at least one target object, determine the comparison type as false positive.

Optionally, the evaluation score determination module is configured to, for any one of the multiple initial autonomous driving images, determine the evaluation score of a target object in the initial autonomous driving image based on the comparison type; determine the scene score of the initial autonomous driving image; and determine the evaluation score of the initial autonomous driving image based on the evaluation score of the target object and the scene score.

Optionally, the evaluation score determination module is also configured to determine at least one of the IoU score, the confidence score, or the area score of the target object based on the comparison type; acquire a preset category score corresponding to the at least one target object; and determine the evaluation score of the target object based on at least one of the IoU score, the confidence score, the area score, or the category score.

Optionally, the evaluation score determination module is also configured to determine a second set IoU value based on the first area and/or the second area, where the second set IoU value is greater than the first set IoU value; and determine an IoU evaluation score based on the comparison type, the first set IoU value, the second set IoU value, and the IoU.

Optionally, the evaluation score determination module is also configured to, in response to the comparison type being false positive or false negative and the IoU being less than the first set IoU value, determine that the IoU evaluation score is a first set IoU evaluation score; in response to the comparison type being true positive and the IoU being greater than or equal to the second set IoU value, determine that the IoU evaluation score is a second set IoU evaluation score; and in response to the comparison type being true positive and the IoU falling within the interval defined by the first set IoU value and the second set IoU value, determine a first IoU evaluation score based on the second set IoU value and the IoU; determine a second IoU evaluation score based on the first set IoU value and the second set IoU value; and determine the IoU evaluation score based on the first IoU evaluation score and the second IoU evaluation score.

Optionally, the evaluation score determination module is also configured to, in response to the comparison type being false positive, determine a first evaluation score of a second confidence level and use the first evaluation score of the second confidence level as the confidence score of the target object; in response to the comparison type being false negative, determine a first evaluation score of a first confidence level and use the first evaluation score of the first confidence level as the confidence score of the target object; and in response to the comparison type being the true positive, determine a second evaluation score of the first confidence level and a second evaluation score of the second confidence level and determine the confidence score of the target object based on the second evaluation score of the first confidence level and the second evaluation score of the second confidence level.

Optionally, the evaluation score determination module is also configured to, acquire a first confidence threshold and a second confidence threshold, where the second confidence threshold is greater than the first confidence threshold; in response to the first confidence level or the second confidence level being less than the first confidence threshold, use a first set confidence score as the first evaluation score of the first confidence level or the first evaluation score of the second confidence level; in response to the first confidence level being greater than or equal to the second confidence threshold or the second confidence level being greater than or equal to the second confidence threshold, use a second set confidence score as the first evaluation score of the first confidence level or the first evaluation score of the second confidence level; and in response to the first confidence level falling within the interval defined by the first confidence threshold and the second confidence threshold, determine a first confidence score based on the first confidence level, the second confidence threshold, and the first confidence threshold; determine a second confidence score based on the second confidence threshold and the first confidence threshold; and determine the first evaluation score of the first confidence level based on the first confidence score and the second confidence score; or in response to the second confidence level falling within the interval defined by the first confidence threshold and the second confidence threshold, determine a third confidence score based on the second confidence level, the second confidence threshold, and the first confidence threshold; determine a fourth confidence score based on the second confidence threshold and the first confidence threshold; and determine the first evaluation score of the second confidence level based on the third confidence score and the fourth confidence score.

Optionally, the evaluation score determination module is also configured to, in response to the first confidence level or the second confidence level being less than the first confidence threshold, use the first set confidence score as the second evaluation score of the first confidence level or the second evaluation score of the second confidence level; in response to the first confidence level being greater than or equal to the first confidence threshold or the second confidence level being greater than or equal to the second confidence threshold, use the first set confidence score as the second evaluation score of the first confidence level or the second evaluation score of the second confidence level; and in response to the first confidence level falling within the interval defined by the first confidence threshold and the second confidence threshold, determine a fifth confidence score based on the first confidence level and the second confidence threshold; determine a sixth confidence score based on the second confidence threshold and the first confidence threshold; and determine the second evaluation score of the first confidence level based on the fifth confidence score and the sixth confidence score; or in response to the second confidence level falling within the interval defined by the first confidence threshold and the second confidence threshold, determine a seventh confidence score based on the second confidence level and the second confidence threshold; determine an eighth confidence score based on the second confidence threshold and the first confidence threshold; and determine the second evaluation score of the second confidence level based on the seventh confidence score and the eighth confidence score.

Optionally, the evaluation score determination module is also configured to, in response to the comparison type being false positive, determine a first evaluation score of the second area and use the first evaluation score of the second area as the area score of the target object; in response to the comparison type being false negative, determine a first evaluation score of the first area and use the first evaluation score of the first area as the area score of the target object; and in response to the comparison type being true positive, determine a second evaluation score of the first area and a second evaluation score of the second area and determine the area score of the target object based on the second evaluation score of the first area and the second evaluation score of the second area.

Optionally, the evaluation score determination module is also configured to, acquire a first area threshold and a second area threshold, where the second area threshold is greater than the first area threshold; in response to the first area or the second area being less than the first area threshold, use a first set area score as the first evaluation score of the first area or the first evaluation score of the second area; in response to the first area being greater than or equal to the second area threshold or the second area being greater than or equal to the second area threshold, use a second set area score as the first evaluation score of the first area or the first evaluation score of the second area; and in response to the first area falling within the interval defined by the first area threshold and the second area threshold, determine a first area score based on the first area, the second area threshold, and the first area threshold; determine a second area score based on the second area threshold and the first area threshold; and determine the first evaluation score of the first area based on the first area score and the second area score; or in response to the second area falling within the interval defined by the first area threshold and the second area threshold, determine a third area score based on the second area, the second area threshold, and the first area threshold; determine a fourth area score based on the second area threshold and the first area threshold; and determine the first evaluation score of the second area based on the third area score and the fourth area score.

Optionally, the evaluation score determination module is also configured to, in response to the first area or the second area being less than the first area threshold, use the first set area score as the second evaluation score of the first area or the second evaluation score of the second area; in response to the first area being greater than or equal to the first area threshold or the second area being greater than or equal to the first area threshold, use the second set area score as the second evaluation score of the first area or the second evaluation score of the second area; and in response to the first area falling within the interval defined by the first area threshold and the second area threshold, determine a fifth area score based on the first area and the first area threshold; determine a sixth area score based on the second area threshold and the first area threshold; and determine the second evaluation score of the first area based on the fifth area score and the sixth area score; or in response to the second area falling within the interval defined by the first area threshold and the second area threshold, determine a seventh area score based on the second area and the first area threshold; determine an eighth area score based on the second area threshold and the first area threshold; and determine the second evaluation score of the second area based on the seventh area score and the eighth area score.

Optionally, the evaluation score determination module is also configured to input the initial autonomous driving image into an autonomous driving scene model and output predicted scene information; acquire set scene information corresponding to the initial autonomous driving image; determine the level of scene similarity between the predicted scene information and the set scene information; and determine the scene score of the initial autonomous driving image based on the level of scene similarity.

Optionally, the target autonomous driving image dataset selection module is configured to sort the multiple initial autonomous driving images based on the evaluation scores of the multiple initial autonomous driving images to obtain a sorted initial autonomous driving image dataset; and select the target autonomous driving image dataset from the sorted initial autonomous driving image dataset, where the target autonomous driving image dataset includes a preset number of target autonomous driving images.

The image dataset processing apparatus of this embodiment of the present application can perform the image dataset processing method of any embodiment of the present application and has function modules and beneficial effects corresponding to the performed method.

It is to be noted that units and modules included in the preceding apparatus are divided according to function logic but are not limited to such division, as long as the corresponding functions can be achieved. Moreover, the specific names of function units are used for distinguishing between each other and not intended to limit the scope of embodiments of the present application.

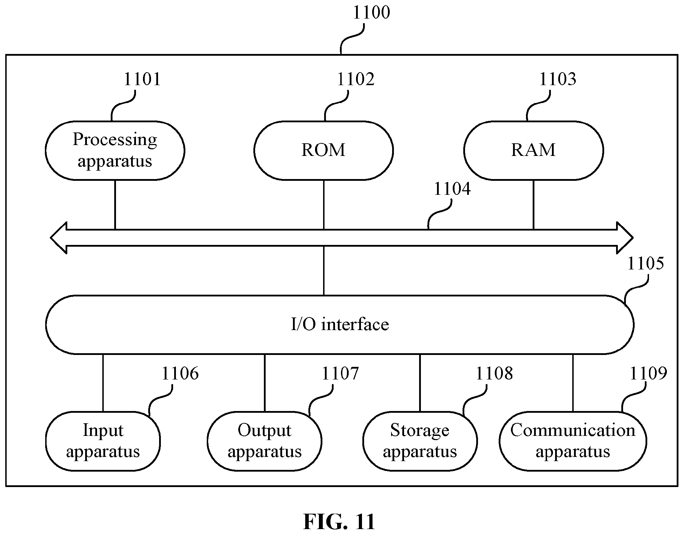

FIG. 11 is a diagram illustrating the structure of an electronic device according to an embodiment of the present application. FIG. 11 is a diagram illustrating the structure of an electronic device 1100 (such as a terminal device or a server in FIG. 11) applicable to implementing embodiments of the present application. The terminal device in the embodiment of the present application may include, but is not limited to, mobile terminals such as a mobile phone, a laptop computer, a digital broadcasting receiver, a personal digital assistant (PDA), a PAD, a portable media player (PMP) and an in-vehicle terminal (for example, an in-vehicle navigation terminal), and stationary terminals such as a digital television (TV) and a desktop computer. The electronic device shown in FIG. 11 is merely an example and is not intended to limit the function and usage scope of embodiments of the present application.

As shown in FIG. 11, the electronic device 1100 may include a processing apparatus 1101 (such as a central processing unit and a graphics processing unit). The processing apparatus 51 may perform various types of appropriate operations and processing based on a program stored in a read-only memory (ROM) 1102 or a program loaded from a storage apparatus 1108 to a random-access memory (RAM) 1103. Various programs and data required for the operation of the electronic device 1100 are also stored in the RAM 1103. The processing apparatus 1101, the ROM 1102, and the RAM 1103 are connected to each other through a bus 1104. An input/output (I/O) interface 1105 is also connected to the bus 1104.

Generally, the following apparatus may be connected to the I/O interface 1105: an input apparatus 1106 such as a touch screen, a touch pad, a keyboard, a mouse, a camera, a microphone, an accelerometer, and a gyroscope; an output apparatus 1107 such as a liquid crystal display (LCD), a speaker, and a vibrator; the storage apparatus 1108 such as a magnetic tape and a hard disk; and a communication apparatus 1109. The communication apparatus 1109 may allow the electronic device 1100 to perform wireless or wired communication with other devices to exchange data. Although FIG. 11 shows the electronic device 1100 having various apparatuses, it is to be understood that all of the apparatuses shown herein need not be implemented or present. Alternatively, more or fewer apparatuses may be implemented or available.

Particularly, according to this embodiment of the present application, the processes described in the preceding with reference to the flowcharts may be implemented as computer software programs. For example, a computer program product is provided in this embodiment of the present application. The computer program product includes a computer program carried on a non-transitory computer-readable medium. The computer program includes program codes for performing the methods illustrated in the flowcharts. In such an embodiment, the computer program may be downloaded from a network and installed through the communication apparatus 1109, or may be installed from the storage apparatus 1108, or may be installed from the ROM 1102. When the computer program is executed by the processing apparatus 1101, the preceding functions defined in the method according to embodiments of the present application are implemented.

The names of messages or information exchanged between apparatuses in embodiments of the present application are illustrative and not to limit the scope of the messages or information.

The electronic device provided in the embodiment belongs to the same inventive concept as the image dataset processing method provided in the previous embodiments, and for the technical details not described in detail in the embodiment, reference may be made to the previous embodiments, and the embodiment has the same beneficial effects as the previous embodiments.

An embodiment of the present application provides a computer storage medium storing a computer program. When the computer program is executed by processor, the image dataset processing method according to any embodiment of the present application is performed.

It is to be noted that the preceding computer-readable medium in the present application may be a computer-readable signal medium or a computer-readable storage medium or any combination thereof. The computer-readable storage medium, for example, may be, but is not limited to, an electrical, magnetic, optical, electromagnetic, infrared, or semiconductor system, apparatus, or device, or any combination thereof. More specific examples of the computer-readable storage medium may include, but are not limited to, an electrical connection with one or more wires, a portable computer magnetic disk, a hard disk, a random-access memory (RAM), a read-only memory (ROM), an erasable programmable read-only memory (EPROM), a flash memory, an optical fiber, a portable compact disk read-only memory (CD-ROM), an optical memory device, a magnetic memory device, or any appropriate combination thereof. In this application, the computer-readable storage medium may be any tangible medium including or storing a program. The program may be used by or used in conjunction with an instruction execution system, apparatus, or element. In the present application, the computer-readable signal medium may include a data signal propagated on a baseband or as part of a carrier, where computer-readable program codes are carried in the data signal. The data signal propagated in this manner may be in multiple forms and includes, but is not limited to, an electromagnetic signal, an optical signal, or any suitable combination thereof. The computer-readable signal medium may also be any computer-readable medium except the computer-readable storage medium. The computer-readable signal medium may send, propagate or transmit a program used by or in connection with an instruction execution system, apparatus, or device. The program codes included on the computer-readable medium may be transmitted via any appropriate medium which includes, but is not limited to, a wire, an optical cable, a radio frequency (RF), or any appropriate combination thereof.

In some embodiments, clients and servers may communicate using any currently known or future developed network protocol, such as the HyperText Transfer Protocol (HTTP), and may be interconnected with any form or medium of digital data communication (such as a communication network). Examples of the communication network include a local area network (LAN), a wide area network (WAN), an internet (such as the Internet) and a peer-to-peer network (such as an ad hoc network), as well as any currently known or future developed network.

The preceding computer-readable medium may be included in the preceding electronic device or may exist alone without being assembled into the electronic device.

The computer-readable medium carries at least one program which, when executed by the electronic device, causes the electronic device to acquire an initial autonomous driving image dataset, where the initial autonomous driving image dataset includes multiple initial autonomous driving images and corresponding annotations; input the initial autonomous driving image dataset into a first autonomous driving detection model to obtain a first image detection result and input the initial autonomous driving image dataset into a second autonomous driving detection model to obtain a second image detection result; compare the first image detection result with the second image detection result to obtain a comparison result, where the first image detection result serves as a reference detection result; determine a comparison type based on the comparison result, where the comparison type includes true positive, false positive, and false negative; determine evaluation scores of the multiple initial autonomous driving images based on the comparison type; and select a target autonomous driving image dataset from the initial autonomous driving image dataset based on the evaluation scores of the multiple initial autonomous driving images and adjust annotations in the target autonomous driving image dataset.

Computer program codes for performing the operations in the present application may be written in one or more programming languages or combination thereof. The preceding one or more programming languages include, but are not limited to, object-oriented programming languages such as Java, Smalltalk and C++, as well as conventional procedural programming languages such as C or similar programming languages. Program codes may be executed entirely on a user computer, executed partly on a user computer, executed as a stand-alone software package, executed partly on a user computer and partly on a remote computer or executed entirely on a remote computer or a server. In the case where the remote computer is involved, the remote computer may be connected to the user computer via any type of network including a local area network (LAN) or a wide area network (WAN) or connected to an external computer (for example, through the Internet using an Internet service provider).

The flowcharts and block diagrams in the drawings show the possible architecture, function and operation of the system, method and computer program product according to various embodiments of the present application. In this regard, each block in the flowcharts or block diagrams may represent a module, a program segment, or part of codes. The module, program segment, or part of codes contains one or more executable instructions for implementing specified logical functions. It is to be noted that in some alternative implementations, the functions marked in the blocks may occur in an order different from that marked in the drawings. For example, two successive blocks may, in practice, be executed substantially in parallel or executed in a reverse order, which depends on the functions involved. It is also to be noted that each block in the block diagrams and/or flowcharts and a combination of blocks in the block diagrams and/or flowcharts may be implemented by a specific-purpose hardware-based system which performs specified functions or operations or a combination of specific-purpose hardware and computer instructions.

The units involved in the embodiments of the present application may be implemented by software or hardware. The names of the units do not constitute a limitation on the units themselves. For example, a first acquisition unit may also be described as "a unit for acquiring at least two Internet protocol addresses".

The functions described herein above may be performed, at least partially, by one or more hardware logic components. For example, and without limitations, example types of hardware logic components that may be used include: a field-programmable gate array (FPGA), an application-specific integrated circuit (ASIC), an application-specific standard product (ASSP), a system on a chip (SOC), a complex programmable logic device (CPLD) and the like.

In the context of the present application, a machine-readable medium may be a tangible medium that may contain or store a program that is used by or in conjunction with a system, apparatus or device that executes instructions. The machine-readable medium may be a machine-readable signal medium or a machine-readable storage medium. The machine-readable medium may include, but is not limited to, an electronic, magnetic, optical, electromagnetic, infrared or semiconductor system, apparatus, or device, or any appropriate combination thereof. Concrete examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination thereof.

The preceding description is merely illustrative of preferred embodiments of the present application and the technical principles used therein. It is to be understood by those skilled in the art that the scope of application involved in the present application is not limited to the technical solutions formed by particular combinations of the preceding technical features and should also cover other technical solutions formed by any combination of the preceding technical features or their equivalents without departing from the concept of the present application, for example, technical solutions formed by the substitutions of the preceding features with the technical features (not limited to being) disclosed in the present application and having similar functions.

Additionally, though operations are depicted in a particular order, this should not be construed as that these operations are required to be performed in the particular order shown or in a sequential order. Under certain circumstances, multitasking and parallel processing may be advantageous. Similarly, though several specific implementation details are included in the preceding discussion, these should not be construed as limitations on the scope of the present application. Certain features described in the context of separate embodiments may also be implemented in combination in a single embodiment. Conversely, various features described in the context of a single embodiment may also be implemented in multiple embodiments individually or in any suitable sub-combination.

Although the subject matter is described in the language specific to structural features and/or methodological logic acts, it is to be understood that the subject matter defined in the appended claims is not necessarily limited to the specific features or acts described above. Conversely, the particular features and acts described in the preceding are example forms for performing the claims.

## Claims

1. An image dataset processing method, comprising:

   acquiring an initial autonomous driving image dataset, wherein the initial autonomous driving image dataset comprises a plurality of initial autonomous driving images and a plurality of annotations corresponding to the plurality of initial autonomous driving images;
   inputting the initial autonomous driving image dataset into a first autonomous driving detection model to obtain a first image detection result and inputting the initial autonomous driving image dataset into a second autonomous driving detection model to obtain a second image detection result;
   comparing the first image detection result with the second image detection result to obtain a comparison result, wherein the first image detection result serves as a reference detection result;
   determining a comparison type based on the comparison result, wherein the comparison type comprises true positive, false positive, and false negative;

determining evaluation scores of the plurality of initial autonomous driving images based on the comparison type; and

selecting a target autonomous driving image dataset from the initial autonomous driving image dataset based on the evaluation scores of the plurality of initial autonomous driving images and adjusting at least one annotation in the target autonomous driving image dataset.

2. The image dataset processing method of claim 1, wherein,

each of the plurality of initial autonomous driving images comprises at least one target object; the first image detection result comprises first detection box information of at least one of the at least one target object, a respective first category corresponding to each of the at least one of the at least one of target object, a first confidence level of the first category, and a first area corresponding to the first detection box information; the second image detection result comprises second detection box information of at least one of the at least one target object, a respective second category corresponding to each of the at least one of the at least one target object, a second confidence level of the second category, and a second area corresponding to the second detection box information; the comparison result comprises a category comparison result; and

comparing the first image detection result with the second image detection result to obtain the comparison result comprises:

comparing the first category with the second category to obtain the category comparison result, wherein the category comparison result comprises category match and category mismatch.

3. The image dataset processing method of claim 2, wherein determining the comparison type based on the comparison result comprises one of the following:

determining an Intersection over Union, IoU, based on the first detection box information and the second detection box information; determining a first set IoU value based on at least one of the first area or the second area; in response to the IoU being greater than or equal to the first set IoU value and the category comparison result being the category match, determining the comparison type as the true positive; and in response to the IoU being less than the first set IoU value and/or the category comparison result being the category mismatch, determining the comparison type as the false positive and the false negative; or

for one target object of the at least one target object, in response to the first image detection result comprising the first detection box information of the one target object while the second image detection result not comprising the second detection box information of the one target object, determining the comparison type as the false negative; and in response to the first image detection result not comprising the first detection box information of the one target object while the second image detection result comprising the second detection box information of the one target object, determining the comparison type as the false positive.

4. The image dataset processing method of claim 3, wherein determining the evaluation scores of the plurality of initial autonomous driving images based on the comparison type comprises:

for any one of the plurality of initial autonomous driving images, determining an evaluation score of each target object of at least one target object in the initial autonomous driving image based on the comparison type; determining a scene score of the initial autonomous driving image; and determining the evaluation score of the initial autonomous driving image based on the evaluation score of each target object and the scene score.

5. The image dataset processing method of claim 4, wherein determining the evaluation score of each target object in the initial autonomous driving image based on the comparison type comprises:

determining at least one of an IoU score, a confidence score, or an area score of each target object based on the comparison type; acquiring a preset category score corresponding to each target object; and determining the evaluation score of each target object based on at least one of the IoU score, the confidence score, the area score, or the category score.

6. The image dataset processing method of claim 5, wherein determining the IoU score of each target object based on the comparison type comprises:

determining a second set IoU value based on at least one of the first area or the second area, wherein the second set IoU value is greater than the first set IoU value; and

determining an IoU evaluation score based on the comparison type, the first set IoU value, the second set IoU value, and the IoU.

7. The image dataset processing method of claim 6, wherein determining the IoU evaluation score based on the comparison type, the first set IoU value, the second set IoU value, and the IoU comprises:

in response to the comparison type being the false positive or the false negative and the IoU being less than the first set IoU value, determining that the IoU evaluation score is a first set IoU evaluation score;

in response to the comparison type being the true positive and the IoU being greater than or equal to the second set IoU value, determining that the IoU evaluation score is a second set IoU evaluation score; and

in response to the comparison type being the true positive and the IoU falling within an interval defined by the first set IoU value and the second set IoU value, determining a first IoU evaluation score based on the second set IoU value and the IoU;

determining a second IoU evaluation score based on the first set IoU value and the second set IoU value; and

determining the IoU evaluation score based on the first IoU evaluation score and the second IoU evaluation score.

8. The image dataset processing method of claim 5, wherein determining the confidence score of each target object based on the comparison type comprises:

in response to the comparison type being the false positive, determining a first evaluation score of the second confidence level and using the first evaluation score of the second confidence level as the confidence score of each target object;

in response to the comparison type being the false negative, determining a first evaluation score of the first confidence level and using the first evaluation score of the first confidence level as the confidence score of each target object; and

in response to the comparison type being the true positive, determining a second evaluation score of the first confidence level and a second evaluation score of the second confidence level and determining the confidence score of each target object based on the second evaluation score of the first confidence level and the second evaluation score of the second confidence level.

9. The image dataset processing method of claim 8, wherein determining the first evaluation score of the first confidence level or determining the first evaluation score of the second confidence level comprises:

acquiring a first confidence threshold and a second confidence threshold, wherein the second confidence threshold is greater than the first confidence threshold;

performing one of the following:

in response to the first confidence level or the second confidence level being less than the first confidence threshold, using a first set confidence score as the first evaluation score of the first confidence level or the first evaluation score of the second confidence level;

in response to the first confidence level or the second confidence level being greater than or equal to the second confidence threshold, using a second set confidence score as the first evaluation score of the first confidence level or the first evaluation score of the second confidence level;

in response to the first confidence level falling within an interval defined by the first confidence threshold and the second confidence threshold, determining a first confidence score based on the first confidence level, the second confidence threshold, and the first confidence threshold; determining a second confidence score based on the second confidence threshold and the first confidence threshold; and determining the first evaluation score of the first confidence level based on the first confidence score and the second confidence score; or

in response to the second confidence level falling within an interval defined by the first confidence threshold and the second confidence threshold, determining a third confidence score based on the second confidence level, the second confidence threshold, and the first confidence threshold; determining a fourth confidence score based on the second confidence threshold and the first confidence threshold; and determining the first evaluation score of the second confidence level based on the third confidence score and the fourth confidence score.

10. The image dataset processing method of claim 9, wherein determining the second evaluation score of the first confidence level or determining the second evaluation score of the second confidence level comprises:

in response to the first confidence level or the second confidence level being less than the first confidence threshold, using the first set confidence score as the second evaluation score of the first confidence level or the second evaluation score of the second confidence level;
in response to the first confidence level being greater than or equal to the first confidence threshold or the second confidence level being greater than or equal to the second confidence threshold, using the first set confidence score as the second evaluation score of the first confidence level or the second evaluation score of the second confidence level;
in response to the first confidence level falling within an interval defined by the first confidence threshold and the second confidence threshold, determining a fifth confidence score based on the first confidence level and the second confidence threshold; determining a sixth confidence score based on the second confidence threshold and the first confidence threshold; and determining the second evaluation score of the first confidence level based on the fifth confidence score and the sixth confidence score; or
in response to the second confidence level falling within an interval defined by the first confidence threshold and the second confidence threshold, determining a seventh confidence score based on the second confidence level and the second confidence threshold; determining an eighth confidence score based on the second confidence threshold and the first confidence threshold; and determining the second evaluation score of the second confidence level based on the seventh confidence score and the eighth confidence score.

11. The image dataset processing method of claim 5, wherein determining the area score of each target object based on the comparison type comprises:

in response to the comparison type being the false positive, determining a first evaluation score of the second area and using the first evaluation score of the second area as the area score of each target object;
in response to the comparison type being the false negative, determining a first evaluation score of the first area and using the first evaluation score of the first area as the area score of each target object; and
in response to the comparison type being the true positive, determining a second evaluation score of the first area and a second evaluation score of the second area and determining the area score of each target object based on the second evaluation score of the first area and the second evaluation score of the second area.

12. The image dataset processing method of claim 11, wherein determining the first evaluation score of the first area or determining the first evaluation score of the second area comprises:

acquiring a first area threshold and a second area threshold, wherein the second area threshold is greater than the first area threshold;
performing one of the following:

in response to the first area or the second area being less than the first area threshold, using a first set area score as the first evaluation score of the first area or the first evaluation score of the second area;
in response to the first area or the second area being greater than or equal to the second area threshold, using a second set area score as the first evaluation score of the first area or the first evaluation score of the second area; and
in response to the first area falling within an interval defined by the first area threshold and the second area threshold, determining a first area score based on the first area, the second area threshold, and the first area threshold; determining a second area score based on the second area threshold and the first area threshold; and determining the first evaluation score of the first area based on the first area score and the second area score; or
in response to the second area falling within an interval defined by the first area threshold and the second area threshold, determining a third area score based on the second area, the second area threshold, and the first area threshold; determining a fourth area score based on the second area threshold and the first area threshold; and determining the first evaluation score of the second area based on the third area score and the fourth area score.

13. The image dataset processing method of claim 12, wherein determining the second evaluation score of the first area or determining the second evaluation score of the second area comprises:

in response to the first area or the second area being less than the first area threshold, using the first set area score as the second evaluation score of the first area or the second evaluation score of the second area;

in response to the first area or the second area being greater than or equal to the first area threshold, using the second set area score as the second evaluation score of the first area or the second evaluation score of the second area; and

in response to the first area falling within the interval defined by the first area threshold and the second area threshold, determining a fifth area score based on the first area and the first area threshold; determining a sixth area score based on the second area threshold and the first area threshold; and determining the second evaluation score of the first area based on the fifth area score and the sixth area score; or

in response to the second area falling within the interval defined by the first area threshold and the second area threshold, determining a seventh area score based on the second area and the first area threshold; determining an eighth area score based on the second area threshold and the first area threshold; and determining the second evaluation score of the second area based on the seventh area score and the eighth area score.

14. The image dataset processing method of claim 4, wherein determining the scene score of the initial autonomous driving image comprises:

inputting the initial autonomous driving image into an autonomous driving scene model and outputting predicted scene information;

acquiring set scene information corresponding to the initial autonomous driving image;

determining a level of scene similarity between the predicted scene information and the set scene information; and

determining the scene score of the initial autonomous driving image based on the level of scene similarity.

15. The image dataset processing method of claim 1, wherein selecting the target autonomous driving image dataset from the initial autonomous driving image dataset based on the evaluation scores of the plurality of initial autonomous driving images comprises:

sorting the plurality of initial autonomous driving images based on the evaluation scores of the plurality of initial autonomous driving images to obtain a sorted initial autonomous driving image dataset; and

selecting the target autonomous driving image dataset from the sorted initial autonomous driving image dataset, wherein the target autonomous driving image dataset comprises a preset number of target autonomous driving images.

16. An image dataset processing apparatus, comprising:

an initial autonomous driving image dataset acquisition module configured to acquire an initial autonomous driving image dataset, wherein the initial autonomous driving image dataset comprises a plurality of initial autonomous driving images and annotations corresponding to the plurality of initial autonomous driving images;

an image detection result acquisition module configured to input the initial autonomous driving image dataset into a first autonomous driving detection model to obtain a first image detection result and input the initial autonomous driving image dataset into a second autonomous driving detection model to obtain a second image detection result;

an image detection result comparison module configured to compare the first image detection result with the second image detection result to obtain a comparison result, wherein the first image detection result serves as a reference detection result;

a comparison type determination module configured to determine a comparison type based on the comparison result, wherein the comparison type comprises true positive, false positive, and false negative;

an evaluation score determination module configured to determine evaluation scores of the plurality of initial autonomous driving images based on the comparison type; and

a target autonomous driving image dataset selection module configured to select a target autonomous driving image dataset from the initial autonomous driving image dataset based on the evaluation scores of the plurality of initial autonomous driving images and adjust at least one annotation in the target autonomous driving image dataset.

17. An electronic device, comprising:

at least one processor and

a storage apparatus configured to store at least one program,
wherein when executed by the at least one processor, the at least one program causes the at least one processor to perform the image dataset processing method of any one of claims 1 to 15.

18. A storage medium comprising computer-executable instructions which, when executed by a computer processor, cause the computer processor to perform the image dataset processing method of any one of claims 1 to 15.

```
                                                                    ┌─S110
┌─────────────────────────────────────────────────────────────────┐
│         Acquire an initial autonomous driving image dataset       │
└─────────────────────────────────────────────────────────────────┘
                                 │
                                 ▼                                  ┌─S120
┌─────────────────────────────────────────────────────────────────┐
│   Input the initial autonomous driving image dataset into a first  │
│   autonomous driving detection model to obtain a first image       │
│   detection result, and input the initial autonomous driving image │
│   dataset into a second autonomous driving detection model to      │
│   obtain a second image detection result                           │
└─────────────────────────────────────────────────────────────────┘
                                 │
                                 ▼                                  ┌─S130
┌─────────────────────────────────────────────────────────────────┐
│   Compare the first image detection result with the second image   │
│   detection result to obtain a comparison result                   │
└─────────────────────────────────────────────────────────────────┘
                                 │
                                 ▼                                  ┌─S140
┌─────────────────────────────────────────────────────────────────┐
│        Determine a comparison type based on the comparison result  │
└─────────────────────────────────────────────────────────────────┘
                                 │
                                 ▼                                  ┌─S150
┌─────────────────────────────────────────────────────────────────┐
│   Determine evaluation scores of the multiple initial autonomous   │
│   driving images based on the comparison type                      │
└─────────────────────────────────────────────────────────────────┘
                                 │
                                 ▼                                  ┌─S160
┌─────────────────────────────────────────────────────────────────┐
│   Select a target autonomous driving image dataset from the initial│
│   autonomous driving image dataset based on the evaluation scores  │
│   of the multiple initial autonomous driving images and adjust     │
│   annotations in the target autonomous driving image dataset       │
└─────────────────────────────────────────────────────────────────┘
```

**FIG. 1**

S201

Acquire an initial autonomous driving image dataset

S202

Input the initial autonomous driving image dataset into a first autonomous driving detection model to obtain a first image detection result and input the initial autonomous driving image dataset into a second autonomous driving detection model to obtain a second image detection result

S203

Compare the first image detection result with the second image detection result to obtain a comparison result

S204

Determine a comparison type based on the comparison result

S205

For any one of the multiple initial autonomous driving images, determine the evaluation score of a target object in the initial autonomous driving image based on the comparison type

S206

Determine the scene score of the initial autonomous driving image

S207

Determine the evaluation score of the initial autonomous driving image based on the evaluation score of the target object and the scene score

S208

Select a target autonomous driving image dataset from the initial autonomous driving image dataset based on the evaluation scores of the multiple initial autonomous driving images and adjust annotations in the target autonomous driving image dataset

**FIG. 2**

**FIG. 3**

**FIG. 4**

conf_score

**FIG. 5**

area_score

**FIG. 6**

**FIG. 7**

**FIG. 8**

**FIG. 9**

| Initial autonomous driving image dataset acquisition module | Image detection result acquisition module | Image detection result comparison module | Comparison type determination module | Evaluation score determination module | Target autonomous driving image dataset selection module |
|---|---|---|---|---|---|

1001  1002  1003  1004  1005  1006

**FIG. 10**

1100

1101 Processing apparatus

1102 ROM

1103 RAM

1104

1105 I/O interface

1106 Input apparatus

1107 Output apparatus

1108 Storage apparatus

1109 Communication apparatus

**FIG. 11**

**INTERNATIONAL SEARCH REPORT**

| International application No. |
| --- |
| **PCT/CN2024/084979** |

| A. | CLASSIFICATION OF SUBJECT MATTER |
| --- | --- |

G06V10/774(2022.01)i;  G06V20/54(2022.01)i;  G06V20/70(2022.01)i

According to International Patent Classification (IPC) or to both national classification and IPC

| B. | FIELDS SEARCHED |
| --- | --- |

Minimum documentation searched (classification system followed by classification symbols)

　IPC：G06V

Documentation searched other than minimum documentation to the extent that such documents are included in the fields searched

Electronic data base consulted during the international search (name of data base and, where practicable, search terms used)

　CNTXT, CNABS, WPABS, DWPI, ENTXT, IEEE, CNKI: 自动驾驶, 智能驾驶, 自主驾驶, 困难样本, 样本, 数据集, 图像集, 评估, 评价, 评分, 得分, 分, 模型, 比对, 对比, 真正例, 假正例, 假反例, automatic driving, intelligent driving, auxiliary driving, data set, image set, sample, evaluation, score, model, compare, true positive, false positive, false negative

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117115580 A (CHENGDU KAWA TECHNOLOGY CO., LTD.) 24 November 2023 (2023-11-24)<br>　　entire document | 1-18 |
| A | CN 114742145 A (INSTITUTE OF SOFTWARE, CHINESE ACADEMY OF SCIENCES) 12 July 2022 (2022-07-12)<br>　　description, paragraphs 0002, 0053-0115, and 0148-0149 | 1-18 |
| A | CN 115713749 A (BEIJING BAIDU NETCOM SCIENCE & TECHNOLOGY CO., LTD.) 24 February 2023 (2023-02-24)<br>　　entire document | 1-18 |
| A | CN 114022858 A (SOUTHWEST UNIVERSITY) 08 February 2022 (2022-02-08)<br>　　entire document | 1-18 |
| A | CN 114511715 A (HUIZHOU DESAY SV AUTOMOTIVE CO., LTD.) 17 May 2022 (2022-05-17)<br>　　entire document | 1-18 |

☑ Further documents are listed in the continuation of Box C.　　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 May 2024** | **04 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/084979**

### C. DOCUMENTS CONSIDERED TO BE RELEVANT

| Category* | Citation of document, with indication, where appropriate, of the relevant passages | Relevant to claim No. |
|---|---|---|
| A | CN 115439828 A (DONGFENG AUTOMOBILE CO., LTD.) 06 December 2022 (2022-12-06)<br>entire document | 1-18 |
| A | US 2023138650 A1 (APOLLO INTELLIGENT CONNECTIVITY (BEIJING) TECHNOLOGY CO., LTD.) 04 May 2023 (2023-05-04)<br>entire document | 1-18 |

Form PCT/ISA/210 (second sheet) (July 2022)

**INTERNATIONAL SEARCH REPORT**
**Information on patent family members**

International application No.

**PCT/CN2024/084979**

| Patent document cited in search report | | | Publication date (day/month/year) | Patent family member(s) | | | Publication date (day/month/year) |
|---|---|---|---|---|---|---|---|
| CN | 117115580 | A | 24 November 2023 | None | | | |
| CN | 114742145 | A | 12 July 2022 | None | | | |
| CN | 115713749 | A | 24 February 2023 | None | | | |
| CN | 114022858 | A | 08 February 2022 | None | | | |
| CN | 114511715 | A | 17 May 2022 | None | | | |
| CN | 115439828 | A | 06 December 2022 | None | | | |
| US | 2023138650 | A1 | 04 May 2023 | KR | 20230008002 | A | 13 January 2023 |
| | | | | EP | 4151979 | A2 | 22 March 2023 |
| | | | | EP | 4151979 | A3 | 28 June 2023 |
| | | | | JP | 2023055697 | A | 18 April 2023 |
| | | | | CN | 114415628 | A | 29 April 2022 |

Form PCT/ISA/210 (patent family annex) (July 2022)

**EP 4 528 669 A1**

**Patent documents cited in the description**

- CN 202310922726X